# EUROPEAN PATENT SPECIFICATION

(11) **EP 0 451 382 B1**
(45) Date of publication and mention of the grant of the patent: **03.03.1999**
(21) Application number: 90303857.8
(22) Date of filing: 10.04.1990
(51) Int. Cl.: G02B 5/02, F21S 5/00, F21V 8/00

(54) **Striated light diffuser and method of forming the same**
Gestreifter Lichtstreukörper und dessen Herstellungsmethode
Diffuseur de lumière rayé et son procédé de fabrication

(43) Date of publication of application: 16.10.1991
(60) Divisional application: 98115295.2
(73) Proprietor: Oyama, Nobuo, Chofu-Shi, Tokyo (JP)
(72) Inventor: Oyama, Nobuo, Chofu-Shi, Tokyo (JP)
(74) Representative: Viering, Jentschura & Partner

(56) References cited:
- EP-A- 6 450
- EP-A- 152 493
- EP-A- 295 634
- DE-B- 1 203 310
- GB-A- 2 145 760
- US-A- 3 829 675
- US-A- 4 422 719
- PATENT ABSTRACTS OF JAPAN vol. 8, no. 233 (P-309)(1670), 26 October 1984; & JP-A-59 111 604 (SUMITOMO DENKI KOGYO) 27.06.1984
- PATENT ABSTRACTS OF JAPAN vol. 8, no. 138 (C-231)(1575), 27 June 1984; & JP-A-59 047 428 (ASAHI KASEI KOGYO) 17.03.1984
- PATENT ABSTRACTS OF JAPAN vol. 10, no. 308 (P-508)(2364), 21 October 1986; & JP-A-61 122 609 (ISEKI & CO) 10 June 1986

## Description

### BACKGROUND OF THE INVENTION

### Field of the Invention

The present invention relates to an elongated structure for receiving light through an end or edge thereof, and radiating or diffusing the light out through a surface of the structure which is substantially perpendicular to the end or edge through which the light was introduced. The invention also relates to a method for manufacturing such a structure.

### Description of the Related Art

A conventional optical fiber or light pipe is designed to transmit light introduced into one end thereof to an opposite end with minimum loss of light through the circumferential surface of the fiber. This is possible since light entering the end of the fiber at an angle less than the numerical aperture of the fiber is totally internally reflected throughout the length of the fiber to the other end.

However, it is desirable in many applications to adapt an optical fiber to radiate or diffuse light introduced into an end thereof from a point light source out through the circumferential or peripheral surface thereof, and thereby function as an elongated light source in combination with the point light source. This has been done in the past by grinding or otherwise roughening the circumferential surface of the optical fiber to reduce the reflectance thereof. Internally propagating light incident on the roughened surface of the fiber is not completely internally reflected, but is partially scattered out of the fiber through the surface. A partially transparent, or translucent optical fiber such as "opal" glass made of acrylic resin by the Asahi Chemical Co. of Japan also radiates light out the circumferential surface thereof.

Although useful in some limited applications, the expedients of making an optical fiber translucent, or roughening the circumferential surface of an optical fiber to produce light radiation out through the surface thereof, are generally unsatisfactory in that the intensity of the radiated light decreases exponentially from the input end along the longitudinal axis of the fiber.

A third method of producing light radiation out the circumferential surface of an optical fiber is to make a series of small cuts in the surface thereof. This expedient is also unsatisfactory in that the radiated light intensity is discontinuous and uneven along the length of the fiber.

The modified optical fibers known in the prior art are not usable in practical applications such as back lights for displays, panel lights, and linear light radiators for photosynthetic reactors which require an even distribution of radiated light along the length of the radiating surface.

From documents EP-A-0 152 493, JP-A-59 111 604, GB-A-2 145 760 and EP-A-0 006 450 light radiating structures are known. However, these documents fail to feach a method to manufacture ridges and the particular structure of the light radiating structure achieving a uniform intensity of radiated light along the axis of the light radiating structure.

It is an aim of the invention to feach a specific light radiating structure and method for manufacturing such structure.

This is achieved by the light radiating structure according to claim 1 and by a method for manufacturing such structure according to claim 2.

These and other features and advantages of the present invention will be apparent to those skilled in the art from the following detailed description, taken together with the accompanying drawings, in which like reference numerals refer to like parts.

### DESCRIPTION OF THE DRAWINGS

FIG. 1 is a side elevation illustrating an optical fiber having a light radiating, striated circumferential surface according to the present invention;
FIGS. 2 and 3 are sectional views illustrating a bundle of optical fibers before and after being fused together to fabricate a light radiating optical fiber embodying the invention;
FIG. 4 is a graph illustrating the performance of light radiating structure fabricated in accordance with a comparative example.

### DETAILED DESCRIPTION OF THE INVENTION

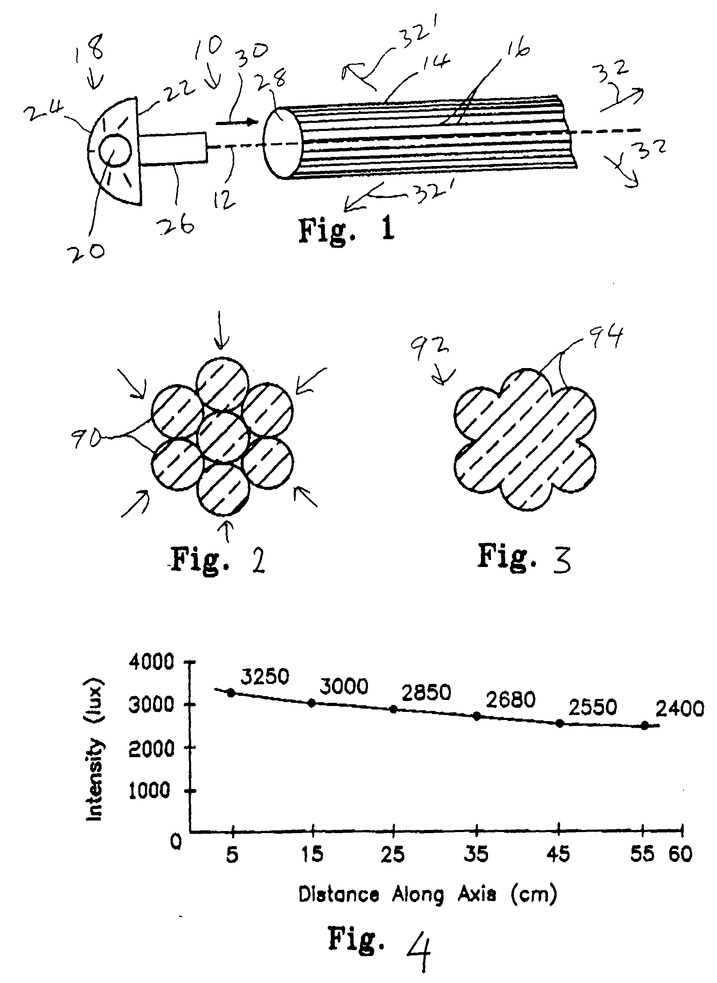

Referring now to FIG. 1 of the drawing, a light radiating or diffusing structure embodying the present invention including a body in the form of an optical fiber is generally designated as 10, and has a longitudinal axis 12 and a peripheral or circumferential surface 14 which extends parallel to the axis 12. The fiber 10 has a circular cross section centered on the axis 12. In accordance with the present invention, a plurality of longitudinal striations 16 are formed in the circumferential surface 14 parallel to the axis 12. A light source 18 includes, for example, a point light source in the form a halogen bulb 20 mounted in a housing 22. A reflector 24 directs the light from the bulb 20 into a light guide 26 which transmits the light into an input face or end 28 of the optical fiber 10 along the longitudinal axis 12 thereof. The light propagates through the fiber 10 along the axis 12 as indicated by an arrow 30. Due to internal reflections in the optical fiber 10 which are affected by the striations 16, the light is progressively radiated out of the circumferential surface 14 of the fiber 10 along the axis 12 in directions indicated by arrows 32, and also in directions 32' if the end of the fiber 10 opposite the end 28 is made reflective. In accordance with an important feature of the present invention, the intensity of light radiated out the circumferential surface 14 is substantially uniform along the axis 12.

As discussed above, light propagating through a conventional optical fiber is totally internally reflected therein and propagates from an input end to an outlet end with minimal radiation out the circumferential surface of the fiber. Roughening the circumferential surface produces radiation out through the circumferential surface with an intensity which decreases exponentially along the length of the fiber.

The present longitudinal striations affect the internal reflection of light by creating additional reflections between the walls of adjacent striations. Each of these additional reflections causes the angle of incidence of the respective light rays to increase relative to the circumferential surface of the fiber. At a certain distance along the fiber, the angle of incidence of a given light ray will be increased by these multiple reflections beyond the angle of total internal reflection of the fiber, and be radiated out the circumferential surface of the fiber. The effect is essentially similar for the case of a panel structure formed with longitudinal striations. The exact mechanism by which the composite reflections interact with each other is complex and not fully understood. However, it appears that the amount of radiation along the length of a structure as affected by the longitudinal striations increases at an exponential rate which is similar to the rate of decrease created by indiscriminate roughening of the surface of the structure. The result is that the intensity of the radiated light is substantially uniform along the longitudinal axis of the structure.

It has been determined that increasing the number of striations per unit area along the light radiating surface of the structure increases the amount of radiated light for a given value of light introduced or directed into the end of the structure. Increasing the depth of the striations also increases the amount of radiated light. In addition, decreasing the radius of curvature of each of the individual striations increases the amount of radiated light. The number, depth, and radius of curvature of the striations may be varied over a wide range, and the particular values selected depend on the configuration of a particular application.

Although it is generally desirable to provide a light radiating structure with uniform radiation along the length thereof, it may be required in some applications that the amount of radiation increase or decrease along the length of the structure. This can be accomplished by tapering the structure (diameter of an optical fiber or thickness of a panel) in the desired direction of non-uniform distribution, or by varying the number, width, and/or depth of the striations. Reducing the thickness of the structure increases the overall angle of internal reflection and thereby the amount of radiated light. Increasing the width and/or depth of the striations increases the amount of radiated light.

A method of fabricating an optical fiber in acccordance with the present invention is illustrated in FIGs. 2 and 3. A plurality of optical fibers 90 are bundled together as illustrated in FIG. 2, and subjected to heat and radial pressure. The ends of the bundle are preferably restrained to prevent shrinkage of the fibers 90. The temperature, pressure, and length of time of application thereof are selected such that the individual fibers 90 fuse together to form a composite optical fiber 92 illustrated in FIG. 2. The striations are constituted by external surfaces 94 of the individual fibers 90 which did not fuse together into the mass of the composite fiber 92.

### EXAMPLE 1

Nineteen optical fibers made of acrylic resin which were 1 mm in diameter and 1000 mm long were bundled together in hexagonal close packing in the configuration illustrated in FIG. 6. The bundle was tightened by wrapping hemp thread along the length thereof. The thread was wound tightly around the bundle with adjacent coils of thread touching each other. Then, the bundle was coated with epoxy resin. Immediately after the bundle was coated, it was inserted in a piece of Teflon heat shrink tubing. Hot air was forced into the tubing to cause it to shrink and tighten the bundle further. Four more Teflon tubes were applied over the bundle in the same manner for a total of five layers of heat shrink tubing. The bundle was then heated in a pipe heater at 150°C for one hour. The bundle was then cooled, and disassembled by breaking the tubing and hemp thread. Seven of the optical fibers which were located closest to the center were reformed into a hexagonal shape along their entire lengths.

Light was introduced into one end of the resulting structure using a light source 18 including a 150 W halogen lamp 20 such as illustrated in FIG. 1. The light radiated out of the circumferential surface of the structure was visually observed to be substantially uniform over the length of the structure, except for approximately the first 15 cm from the light receiving end.

### EXAMPLE 2

This example refers to a comparative example not covered by the claims.

Three stainless steel tanks which were 1000 mm long, 100 mm wide, and 50mm high were provided. A 1000 mm long x 100 mm wide, 800 W sheet rubber heater was glued to the bottom of one of the tanks. The tank to which the heater was attached was enclosed in a wooden box. This tank was filled with salad oil, and heated to 142 ±1°C. The other two tanks were filled with ice water, and maintained at a temperature of 5°C or lower.

An acrylic resin optical fiber with a diameter of 1mm and a length of 1000 mm was immersed in one of the cold water tanks for approximately one minute. Then, approximately the center 600 mm of the fiber was immersed in the hot oil tank for approximately 3 seconds, with the ends of the fiber being clamped to prevent shrinkage of the fiber. Finally, the fiber was immersed in the other cold water tank for approximately 30 seconds. As a result, a plurality of longitudinal striations were formed on the surface of the fiber.

The light source used in EXAMPLE 1 was used to introduce light into one end of the fiber. The amount of luminous flux entering the fiber was measured to be 8.8 1m. The distribution of radiated light intensity along the center 60 mm in which the striations were formed is illustrated in FIG. 4. The amount of luminous flux radiated from the entire circumferential surface of the fiber was measured to be 5.3 lm. This amount was confirmed by converting the measured light intensity in FIG. 15 into luminous flux. The amount of luminous flux radiated from the opposite end of the fiber was measured to be 3.5 lm. Thus, approximately 60% of the luminous flux which entered the fiber was consumed along the striated portion, and approximately 100% of the consumed light was radiated out the surface of the fiber in the striated portion.

## Claims

1. A light radiating structure, comprising:
a light transmitting body (10), (40) having a longitudinal axis (12), (42) and a circumferential light radiating surface (14) extending substantially parallel to said axis (12); and
a plurality of ridges (16) formed in said surface (14) and extending substantially parallel to said axis (12) such that light entering the body (10) along said axis (12) is radiated out of the body (10) through said surface (14) with substantially uniform intensity along said axis (12), where
the body (10) has a substantially circular cross section centered on said axis (12) and a circumferential surface (14) which constitutes said light radiating surface (14), and
in which the body (10) comprises a bundle of optical fibers (90) which are fused together such that exposed portions (94) of the optical fibers (90) constitute the ridges (16) respectively.

2. A method of fabricating a light radiating structure according to claim 1, comprising the steps of:
(a) providing a plurality of optical fibers (90);
(b) bundling the optical fibers (90) together; and
(c) heating the optical fibers (90) to a temperature and for a length of time selected to cause the optical fibers (90) to fuse together such that exposed portions (94) of the fused optical fibers (90) form light radiating longitudinal ridges (94).

## Patentansprüche

1. Lichtausstrahlende Vorrichtung mit:
einem lichtausstrahlenden Körper (10), (40) mit einer Längsachse (12), (42) und einer lichtausstrahlenden Umfangsfläche (14) aufweist, welche sich im wesentlichen parallel zu der Achse (12) erstreckt; und
einer Mehrzahl von Rippen (16), welche in der Oberfläche (14) ausgebildet sind und sich derart parallel zu der Achse (12) erstrecken, daß in den Körper (10) entlang der Achse (12) hineingeführtes Licht aus dem Körper (10) durch die Oberfläche (14) hindurch mit im wesentlichen entlang der Achse (12) gleichbleibender Intensität ausgestrahlt wird, wobei
der Körper (10) einen im wesentlichen kreisförmigen Querschnitt aufweist, dessen Mitte von der Achse (12) ausgebildet wird, und die lichtausstrahlende Oberfläche (14) die Gestalt einer Umfangs-Oberfläche (14) aufweist, und wobei
der Körper (10) ein derart zusammengeschmolzenes Bündel von optischen Fasern (90) aufweist, daß die freiliegenden Abschnitte (94) der optischen Fasern (90) die Rippen (16) ausbilden.

2. Verfahren zum Herstellen einer lichtausstrahlenden Vorrichtung nach Anspruch 1, mit den Verfahrensschritten:
(a) Bereitstellen einer Mehrzahl von optischen Fasern (90);
(b) Zusammenbündeln der optischen Fasern (90); und
(c) Erwärmen der optischen Fasern (90) auf eine derart ausgewählte Temperatur und über einen derart ausgewählten Zeitraum, daß die optischen Fasern (90) derart miteinander verschmelzen, daß die freiliegenden Abschnitte (94) der zusammengeschmolzenen Fasern (90) lichtausstrahlende Längsrippen (94) ausbilden.

## Revendications

1. Dispositif de rayonnement lumineux comportant:
un corps de transmission de lumière (10), (40) ayant un axe longitudinal (12), (42) et une surface de rayonnement lumineux circonférentielle (14) alignée essentiellement en parallèle avec ledit axe (12); et
une pluralité d'arêtes (16) formées sur ladite surface (14) et alignées essentiellement en parallèle avec ledit axe (12) de façon à ce que la lumière qui entre dans le corps (10) suivant ledit axe (12) est rayonnée du corps (10) à travers ladite surface (14) avec une intensité essentiellement uniforme sur ledit axe (12),
le corps (10) ayant une section transversale essentiellement circulaire centrée sur ledit axe (12) et une surface circonférentielle (14) constituant ladite surface de rayonnement lumineux (14), et
le corps (10) comprenant un faisceau de fibres optiques (90) fusées les unes aux autres de façon à ce que des parties exposées (94) des fibres optiques (90) constituent les arêtes (16) respectives.

2. Procédé de fabrication d'un dispositif de rayonnement lumineux selon la revendication 1, comportant les étapes suivantes:
(a) une pluralité de fibres optiques (90) est mise à la disposition du procédé;
(b) les fibres optiques (90) sont mises ensemble pour former un faisceau de fibres; et
(c) les fibres optiques (90) sont chauffées à une température et pendant une durée sélectionnées pour fuser les fibres optiques (90) les unes aux autres de façon à ce que des parties exposées (94) des fibres optiques (90) fusées forment des arêtes longitudinales (94) aptes à rayonner de la lumière.
